# DEMANDE DE BREVET EUROPEEN

(11) **EP 1 088 997 A1**
(43) Date de publication de la demande: **04.04.2001**
(21) Numéro de dépôt: 00402694.4
(22) Date de dépôt: 29.09.2000
(51) Int. Cl.: F16B 5/12

(54) **Ensemble de fixation d'une pièce sur une carrosserie automobile**

(30) Priorité: 30.09.1999 FR 9912202
(71) Demandeur: EUROSTYLE (S.A.), F-91370 Verrières le Buisson (FR)
(72) Inventeur: Boulbon, Jack, 36130 Deols (FR); Motto, Alain, 36330 le Poinconnet (FR)
(74) Mandataire: Viard, Jean

(57) **Abrégé**

Ensemble de fixation d'une pièce sur un support, notamment pour automobiles, la pièce à fixer comprenant un ensemble de plots (1) à l'intérieur desquels sont fixées des agrafes (3) à partir desquelles s'étend une patte semi rigide (4) dont l'extrémité libre prend appui sur la carrosserie.

## Description

La présente invention a pour objet une agrafe composite au moins partiellement en matière thermoplastique destinée en particulier, mais non exclusivement, au montage de pièces sur une carrosserie automobile.

L'industrie automobile est une industrie de montage qui consiste à assembler différentes pièces pour constituer un véhicule. Le coût d'assemblage constitue une partie importante du prix de revient d'un véhicule. En particulier, il convient de rapporter sur la carrosserie des éléments d'obturation ou fermeture de certaines parties.

Un tel assemblage se fait, traditionnellement par soudure ou vissage de la pièce à assembler sur la carrosserie. Mais de telles opérations , même effectuées par des robots, sont coûteuses. Il a déjà été proposé de réaliser de tels assemblages au moyen de clips ou agrafes métalliques ou en matière plastique Mais cette fixation est locale et unidirectionnelle.

Un premier objet de l'invention est de pallier cet inconvénient et de proposer une agrafe prenant appui sur l'élément obturateur et comprenant au moins une patte de maintien de l'agrafe sur la carrosserie. Cette patte en raison de sa matière et de sa configuration est semi-rigide.

Un second objet de l'invention est l'obtention de moyens de fixation tels que bornes ou plots intégrés, lors du moulage et par suite convenablement positionnés, à la pièce à monter sur la carrosserie

Selon l'invention, l'ensemble de fixation d'une pièce est caractérisé en ce qu'elle comprend, sur la pièce à assembler au moins deux plots intégrés à la pièce sur lesquels est montée une agrafe incluant au moins une patte en saillie radiale, dont l'extrémité libre prend appui sur la carrosserie du véhicule.

La (ou les) patte semi-rigide joue, par son appui élastique le rôle de ressort et permet d'assurer une fixation absorbant les écarts dimensionnels pouvant se produire, notamment en raison des dilatations, des vibrations ou des chocs pouvant se produire.

Selon une autre caractéristique de l'invention, un couvercle à verrouillage quart de tour assure la fixation de l'agrafe sur la pièce à assembler.

Ainsi, l'agrafe peut être directement enclipsée sur la pièce à assembler et verrouillée sur celle-ci, la liaison créée par la patte souple avec la carrosserie étant réalisée par déformation de celle-ci ce qui permet un gain de temps de montage appréciable. La géométrie de l'agrafe permet d'absorber les écarts dimensionnels lors de l'assemblage de différentes pièces.

D'autres caractéristiques et avantages de l'invention apparaîtront au cours de la description qui va suivre de modes particuliers de réalisation, donnés uniquement à titre d'exemples non limitatifs, en regard des dessins qui représentent :
- la figure 1, une vue en coupe d'un montage faisant appel à une agrafe selon l'invention;
- la figure 2, une vue de la fixation selon la ligne II-II de la figure 1;
- la figure 3, une vue éclatée des différents éléments constitutifs de la fixation en position de déverrouillage;
- la figure 4 une vue éclatée des différents éléments constitutifs de la fixation en position de verrouillage;
- la figure 5 une vue de la fixation montée sur une grille.

L'exemple qui sera donné ci-dessous concerne la fixation sur une carrosserie d'une grille d'auvent. De telles grilles sont fixées sur le pare-brise, à la partie inférieure de celui-ci pour recueillir et orienter l'eau de pluie qui s'écoule sur celui-ci et réguler la circulation d'air à l'intérieur de l'habitacle. L'utilisation d'une grille permet de filtrer les feuilles ou autres déchets qui risqueraient autrement d'atteindre le compartiment moteur. Cette grille d'auvent doit être fixée sur la carrosserie dans une zone où plusieurs pièces présentent dans leur assemblage des phénomènes de dilatation, de rigidité etc.

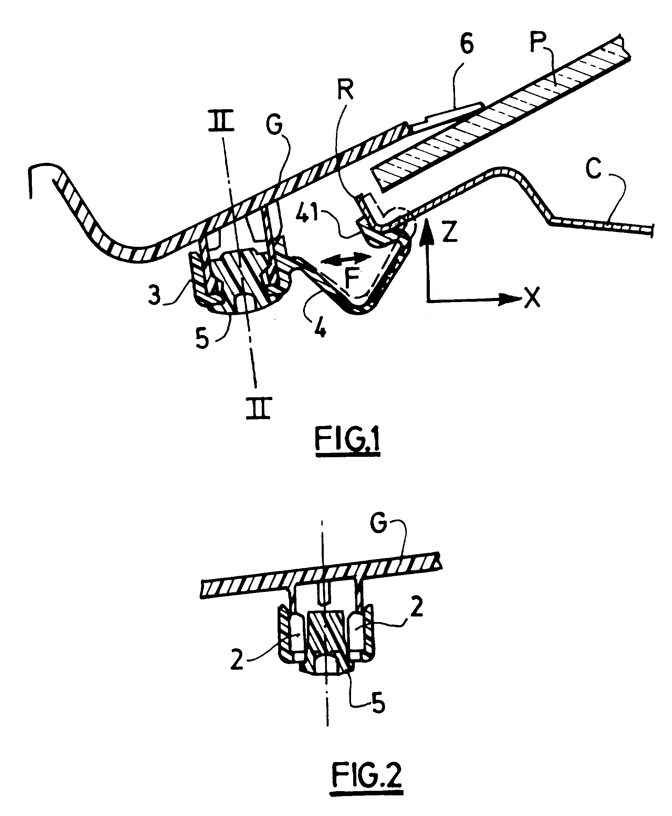

Sur la figure 1, on distingue le pare-brise P, généralement en verre feuilleté dont la partie inférieure vient prendre appui sur un rebord R de la carrosserie C par l'intermédiaire d'un joint (non représenté).

Lors du moulage de la grille G, sont formées plusieurs bornes 1 ou plots cylindriques creux, alignées parallèlement au bord du pare-brise P, dont une seule apparaît sur la figure, dans lesquelles sont découpées deux secteurs semi élastiques 2 qui seront verrouillés par des éléments du couvercle 5. Lors du montage, une agrafe 3 est insérée autour de chaque borne 1. Conformément à l'invention, une patte semi-élastique 4 fait saillie à partir de l'agrafe 3. Une pièce de verrouillage 5 est ensuite insérée à l'intérieur de l'agrafe 3 et de la borne 1 pour assurer la solidarisation des deux pièces avec la borne.

Lors du démoulage, la patte de fixation présente la configuration représentée en pointillés sur la figure 1. Lors du montage, elle est déformée par le rebord R et est ainsi maintenue élastiquement en contrainte. La flèche F schématise ce pincement de la patte 4 entre la borne 1 et le rebord R de la carrosserie.

De préférence, la grille G peut se prolonger vers le pare-brise par une lèvre souple 6 moulée en bi-matière en une seule opération ce qui améliore la liaison entre la grille G et le pare-brise P.

Sur la figure 2 qui est une coupe selon la ligne II-II de la figure 1, on voit que le verrou 5 vient, après montage bloquer les secteurs 2 contre la surface intérieure de l'agrafe 5 comme cela sera décrit par la suite.

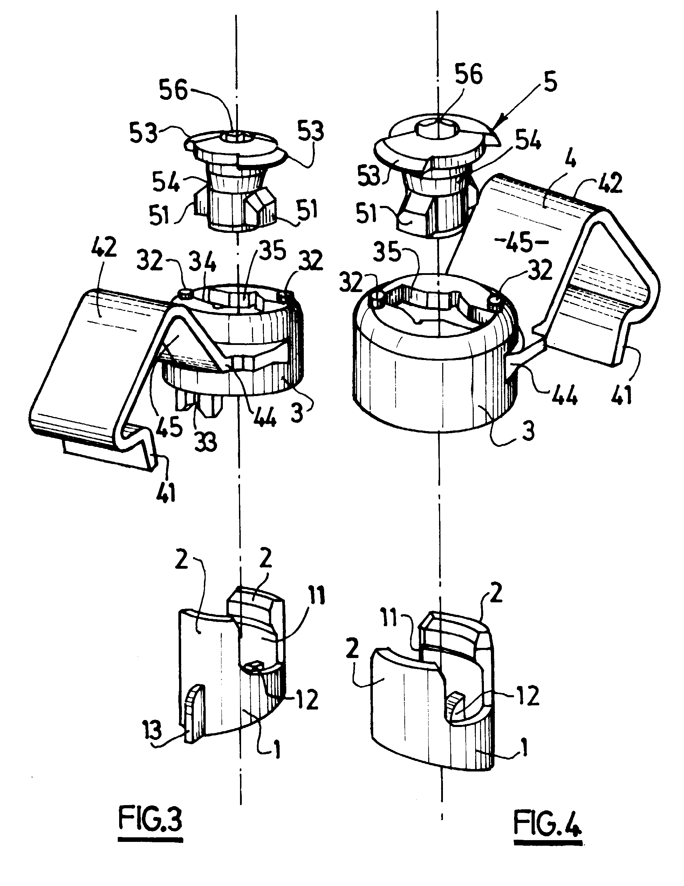

Les figures 3 et 4 représentent, en vue éclatée, les composants de l'agrafe et de la fixation, une fixation étant constituée par une borne 1 moulée avec la grille et par un ensemble co-moulé comprenant une agrafe 3 et un couvercle de verrouillage 5. Sur la figure 3, les trois constituants sont représentés dans la position qu'ils occupent après déverrouillage du couvercle. Sur la figure 4, ces mêmes composants sont représentés dans leur position de verrouillage, la fixation étant démontable en faisant tourner le chapeau dans le sens sinistrorsum ou anti-horaire alors que le verrouillage est effectué en sens inverse.

La borne ou plot de fixation 1 est moulée avec la grille d'auvent et, plus généralement avec la pièce à assembler sur la carrosserie. Elle se présente sous la forme de deux secteurs cylindriques 2 reliés à leur base par une couronne cylindrique, sur le sommet desquels viendra s'appuyer l'agrafe 3. Comme cela apparaît sur la figure 3, l'agrafe comprend deux nervures verticales déterminant une rainure 33. La rainure 33 vient s'enfiler sur une nervure 13 de la douille 1 afin d'assurer un positionnement correct de l'agrafe par rapport à la borne.

L'agrafe 3, de forme générale cylindrique creuse pour s'enfiler sur la borne 1 présente, à sa partie supérieure une fente 35 permettant l'insertion de la partie inférieure du couvercle 5, dans une seule position. Elle présente, à sa partie supérieure, deux tétons 32 diamétralement opposés destinés à former des butées pour deux ailes 53 en saillie sur le couvercle 5. Le couvercle présente également une couronne 54 déformable venant, lors du montage du couvercle s'insérer au-dessous de la surface 34 de l'agrafe 3 pour assurer une solidarisation par clippage des deux pièces. Au-dessous de la couronne 54, on distingue deux excroissances 51 formant cames qui viennent, lors du verrouillage en appui contre les surfaces 11 internes inclinées des côtés 2 de la borne 1, une seule de ces surfaces apparaissant sur la figure. Le couvercle 5 présente à sa partie supérieure une empreinte 56, de type ALLEN dans l'exemple représenté, qui va permettre de faire tourner, à l'aide d'une clé appropriée classique, le couvercle d'un quart de tour par rapport à l'agrafe pour assurer le verrouillage définitif des trois pièces constituant la fixation, par portée des cames 51 contre les surfaces 11 des plots 1. Toute autre forme d'empreinte permettant de faire tourner le chapeau 5 peut, bien entendu, être utilisée.

Selon une caractéristique de l'invention, le couvercle 5 est moulé dans le même moule que l'agrafe 3 et est mécaniquement clippé dans celle-ci avant éjection du moule. L'élément d'assemblage est ainsi livré directement avec son verrou à cames pré monté. La fente 33 assure un positionnement convenable de l'agrafe 3 par rapport à la borne 1, la fente 35 assurant le positionnement correct du couvercle 5 par rapport à l'agrafe 3 et, par suite à la borne 1. L'agrafe et son verrou apparaissent ainsi comme un seul composant qui est inséré dans la borne dans un premier temps, puis verrouillé.

On a représenté sur la figure 1 en X et Z les deux directions dans lesquelles se produisent normalement des écarts entre le pare-brise et la grille d'auvent. À partir du corps cylindrique de l'agrafe 3 s'étend radialement une patte de fixation 4. Cette patte présente une section en forme de « U » ou «Oméga» avec un rebord extérieur 41, un premier pli 43, un second pli 42, une branche 44 formant, de moulage, partie intégrante de l'agrafe 3. L'écartement entre la branche 45 et le rebord 41 est supérieur, lors du démoulage, à la distance entre une borne 1 et la carrosserie C de sorte, qu'après la pose de la grille G, la patte 4 soit précontrainte et exerce une pression continue sur la grille pour maintenir celle-ci éloignée du pare-brise dans la direction « X ». Cette précontrainte maintient également éloignés ces deux éléments dans la direction « Z ».

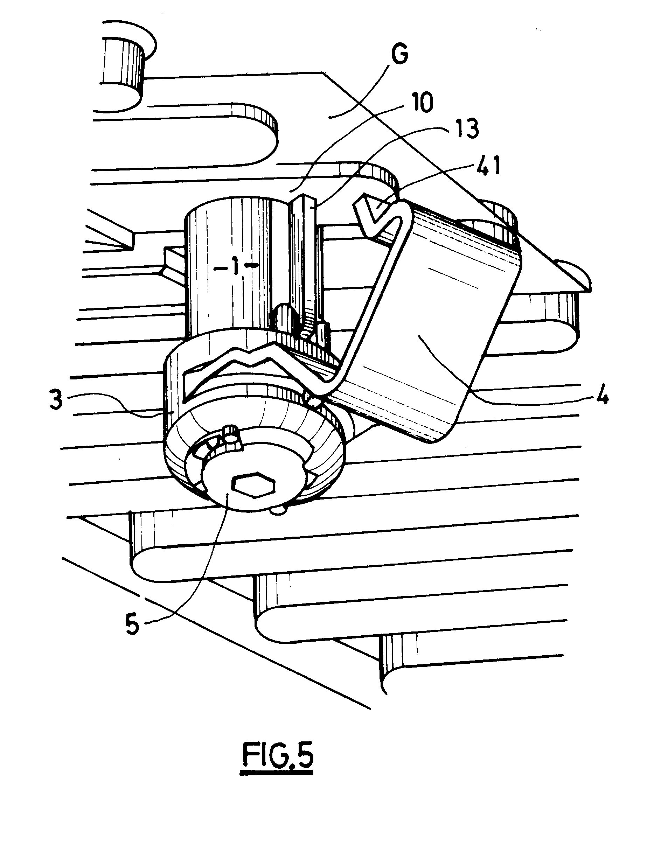

La figure 5 représente une agrafe selon l'invention en position sur une grille d'auvent G. On y retrouve une borne 1 sur le sommet de laquelle est montée une agrafe 3 à l'intérieur de laquelle est inséré un chapeau 5. La grille se présente comme un ensemble de rainures ouvertes à leurs parties inférieures espacées selon un pas déterminé. Toutefois, certaines zones 10 sont planes et fermées et reçoivent, de moulage, un plot 1 dans lequel est monté ultérieurement l'ensemble agrafe3-couvercle 5, la patte 4 étant automatiquement orientée en direction du pare-brise.

Il va de soi que de nombreuses variantes peuvent être apportées, notamment par substitution de moyens techniques équivalents, sans sortir pour cela du cadre de l'invention.

## Revendications

1. Ensemble de fixation d'une pièce sur un support tel qu'une carrosserie de véhicule, caractérisé en ce qu'il comprend, sur la pièce à assembler, au moins deux plots (1) intégrés à la pièce sur chacun desquels est montée une agrafe (3) incluant au moins une patte (4) en saillie radiale, dont l'extrémité libre (41) prend appui sur le support.

2. Ensemble de fixation selon la revendication 1, caractérisé en ce qu'un couvercle (5) à verrouillage quart de tour assure la fixation de l'agrafe (3) sur le plot correspondant (1) intégré à la pièce à fixer.

3. Ensemble de fixation selon la revendication 1, caractérisé en ce que les composants (1,3,5) de la fixation sont en matière plastique, les plots (1) étant moulés avec la pièce à fixer, l'agrafe (3) et son couvercle de verrouillage (5) étant moulés simultanément.

4. Ensemble de fixation selon la revendication 3, caractérisé en ce que l'agrafe (3) et son couvercle (5) sont montés l'un dans l'autre à l'intérieur du moule.

5. Ensemble de fixation selon la revendication 1, caractérisé en ce que la patte flexible (4) est, après montage, en précontrainte entre le rebord (R) de la pièce et le plot (1).

6. Ensemble de fixation selon la revendication 1, caractérisé en ce qu'une lèvre plastique souple (6) est moulée dans le bord supérieur de la grille rigide (G).

7. Ensemble de fixation selon la revendication 2, caractérisé en ce que le couvercle (5) porte deux cames (51) diamétralement opposées qui, après passage par l'ouverture (35) viennent porter contre des surfaces (11) du plot (1).

8. Ensemble de fixation selon la revendication 2, caractérisée en ce que le couvercle (5) porte une couronne flexible (54) se clippant contre la surface (34) de l'agrafe (3).

9. Grille d'auvent caractérisée en ce qu'elle porte des plots (1) à l'intérieur desquels sont montés des ensembles (35) dont les pattes viennent porter contre un rebord (R) de la carrosserie.
